# EUROPEAN PATENT APPLICATION

(11) **EP 3 944 232 A1**
(43) Date of publication of application: **26.01.2022**
(21) Application number: 20205245.2
(22) Date of filing: 02.11.2020
(51) Int. Cl.: G10L 15/22, G10L 17/00, G06F 3/16, B60W 60/00

(54) **VOICE CONTROL FOR AUTONOMOUS VEHICLES**

(30) Priority: 25.07.2020 IN 202011031938
(71) Applicant: NXP B.V., 5656 AG Eindhoven (NL)
(72) Inventor: Rajan Kesavelu Shekar, Pramod, Redhill, Surrey RH1 1QZ (GB); Meijer, Rinze Ida Mechtildis Peter, Redhill, Surrey RH1 1QZ (GB)
(74) Representative: Miles, John Richard

(57) **Abstract**

A method and apparatus for controlling an autonomous vehicle is described. An audio signal is detected and processed the to determine whether the speech comprises a vehicle-navigation command. The audio signal is analyzed to determine whether the signal includes speech from an authorised occupant of the vehicle. If the speech includes an authorised vehicle-navigation command which is feasible to execute given the current position of the vehicle, the command is executed to control the direction and speed of the autonomous vehicle.

## Description

### FIELD

This disclosure relates to a method and apparatus for in-vehicle voice control for autonomous vehicles.

### BACKGROUND

Autonomous vehicles or self-driving vehicles may allow a vehicle to carry passenger to a desired destination without the need for a driver. The Society of Automotive Engineers publication "Taxonomy and Definitions for Terms Related to Driving Automation Systems for On-Road Motor Vehicles J3016™", issued 16th January 2014 and revised 15th June 2018 defines six levels of automation. For example, a vehicle with level 4 automation may operate safely in predefined zones without any human intervention, and a vehicle with level 5 automation may operate safely anywhere. Such a vehicle may be operated for example as a robot taxi.

### SUMMARY

Various aspects of the disclosure are defined in the accompanying claims.

In a first aspect there is provided a method for controlling an autonomous vehicle, the method comprising: detecting an audio signal; processing the audio signal to determine whether the speech comprises a vehicle-navigation command; determining whether the audio signal comprises speech from an authorised occupant of the vehicle; in response to the speech comprising an authorised vehicle-navigation command, determining whether execution of the vehicle-navigation command is feasible and executing the vehicle-navigation command if feasible to control at least one vehicle actuator to control the direction and speed of the autonomous vehicle.

In one or more embodiments the method may comprise providing feedback to the authorized occupant if execution of the vehicle navigation command is not feasible.

In one or more embodiments determining whether the audio signal comprises speech of an authorised occupant of the vehicle further comprises determining the seat location of the occupant.

In one or more embodiments in response to determining that the execution of the vehicle is not feasible, providing an indication to the user that the action is prohibited.

In one or more embodiments the method may comprise comparing the voice signature of the received speech with a predetermined speech signature database and determining if an occupant is an authorised occupant from the comparison.

In one or more embodiments determining whether execution of the vehicle-navigation command is feasible may comprise: receiving navigation data via at least one of an in-vehicle navigation system and vehicle-to-x (V2X) network; and obtaining environmental context attributes from the received navigation data.

In one or more embodiments the method may comprise receiving an abort instruction for a previously issued command; determining whether the previously issued command is in an execution phase; cancelling the previously issued command if the previously issued command is not in an execution phase.

In a second aspect there is provided an audio device comprising: a microphone; a transceiver; a processor coupled to the transceiver and the microphone and configured to: process the audio signal to determine whether the speech comprises a vehicle-navigation command; transmit a control instruction comprising the vehicle-navigation command to a vehicle control system coupled to the audio device, the vehicle control system being configured to determine whether the vehicle-navigation command is authorised; and in response to determining that the vehicle-navigation command is authorised, control at least one actuator in the vehicle dependent on the authorized vehicle-navigation command.

In one or more embodiments, the audio device may be further configured to: receive a location identifier via the transceiver from a location identification transmitter located in a vehicle; and wherein the control instruction further comprises the received location identifier and wherein the vehicle control system is further configured to determine whether the audio signal comprises speech from an authorised occupant of the vehicle from the location of the occupant provided by the location identification transmitter.

In one or more embodiments, the audio device may be configured as a mobile hearable device and comprise a wireless transceiver configured as one of a near field magnetic induction, NFMI, transceiver, a near field electromagnetic induction, NFEMI, transceiver and an Ultra-Wide-Band, UWB, transceiver.

In a third aspect there is provided a vehicle control apparatus for an autonomous vehicle comprising: a vehicle function controller configured to be coupled to one or more vehicle actuators and comprising a vehicle control transceiver configured to be coupled to an audio device; wherein the vehicle control transceiver is configured to receive a vehicle-navigation command from the audio device and is further configured to determine whether the vehicle-navigation command is authorized and to control the one or more vehicle actuators to control the direction and speed of the autonomous vehicle dependent on the authorized vehicle-navigation command.

In one or more embodiments, the vehicle control apparatus may further comprise at least one location identification transmitter located in the autonomous vehicle wherein each of the at least one location identification transmitters are configured to transmit a respective location identifier for authorizing a vehicle-navigation command to the audio device.

In one or more embodiments, the at least one location identification transmitter may comprise a wireless transceiver configured as one of a near field magnetic induction, NFMI, transceiver, a near field electromagnetic induction, NFEMI, transceiver and an Ultra-Wide-Band, UWB, transceiver.

Embodiments of the audio input device and vehicle control apparatus may be included in a system for controlling an autonomous vehicle.

In a fourth aspect there is provided a non-transitory computer readable media comprising a computer program comprising computer executable instructions which, when executed by a processing unit, causes the processing unit to control an autonomous vehicle by performing the steps of :detecting an audio signal; processing the audio signal to determine whether the speech comprises a vehicle-navigation command; determining whether the audio signal comprises speech from an authorised occupant of a vehicle; in response to the speech comprising an authorised vehicle-navigation command, determining whether execution of the vehicle-navigation command is feasible and executing the vehicle-navigation command if feasible to control at least one vehicle actuator to control the direction and speed of the autonomous vehicle.

In one or more embodiments, the non-transitory computer readable media may further comprise instructions to perform the steps of providing feedback to the authorized occupant if execution of the vehicle navigation command is not feasible.

In one or more embodiments, the non-transitory computer readable media may further comprise instructions to determine whether the audio signal comprises speech of an authorised occupant of the vehicle be determining the seat location of the occupant.

In one or more embodiments, the non-transitory computer readable media may further comprise instructions to provide an indication to the user that the action is prohibited in response to determining that the execution of the vehicle is not feasible.

In one or more embodiments, the non-transitory computer readable media may further comprise instructions to compare the voice signature of the received speech with a predetermined speech signature database and determine if an occupant is an authorised occupant from the comparison.

In one or more embodiments, the non-transitory computer readable media may further comprise instructions to receive an abort instruction for a previously issued command; determine whether the previously issued command is in an execution phase; and cancel the previously issued command if the previously issued command is not in an execution phase.

### BRIEF DESCRIPTION OF THE DRAWINGS

In the figures and description like reference numerals refer to like features. Embodiments are now described in detail, by way of example only, illustrated by the accompanying drawings in which:
Figure 1 Shows a system for in-vehicle voice control of an autonomous vehicle according to an embodiment.
Figure 2 Illustrates an example operation of the microphone unit in the system of figure 1.
Figure 3 Shows an example implementation of an audio device to implement a microphone unit in the system of figure 1.
Figure 4 illustrates an example method of capturing the navigation instruction implemented by the vehicle function controller of the system of figure 1.
Figure 5 illustrates an example method of navigation action instruction implemented by the vehicle function controller of the system of figure 1.
Figures 6A illustrates different phases of operation of one or more embodiments and figure 6B illustrate an example method of aborting an instruction implemented by the vehicle function controller of the system of figure 1 dependent on the phases of operation shown in figure 6A.
Figure 7A illustrates an example method of a stop instruction implemented by the vehicle function controller of the system of figure 1.
Figure 7B illustrates an example method of a parking instruction implemented by the vehicle function controller of the system of figure 1.
Figure 7C illustrates an example method of rerouting implemented by the vehicle function controller of the system of figure 1.
Figure 8 illustrates an a system for in-vehicle voice control of an autonomous vehicle according to an embodiment.

### DETAILED DESCRIPTION

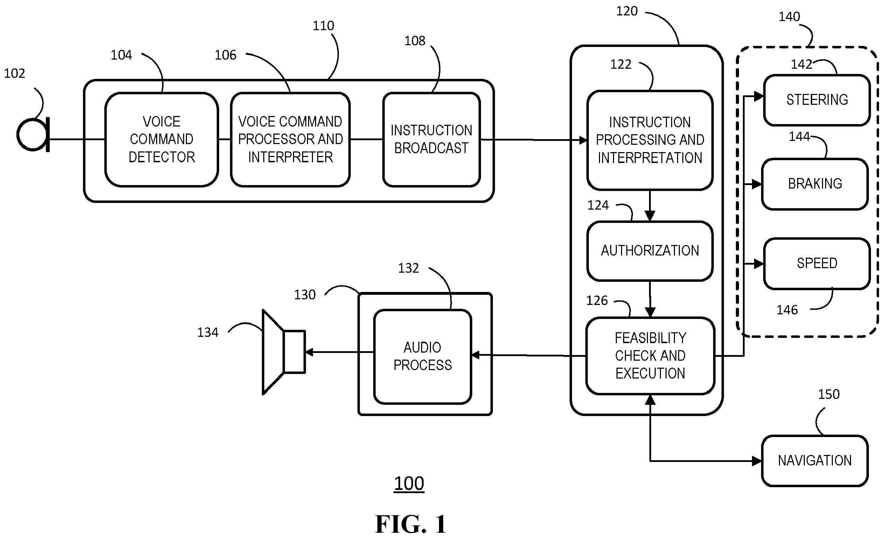

Figure 1 illustrates a system 100 for in-vehicle voice control of an autonomous vehicle according to an example embodiment. The system 100 includes an audio input device 110 coupled to a microphone 102 that captures a voice command which may be a vehicle-navigation command and provides it to the vehicle electronics implementing a vehicle function controller 120. The audio input device 110 and microphone 102 may be referred to herein as a microphone unit. The audio input device 110 may include a voice command detector 104, a voice command processor and interpreter 106 and an instruction broadcast module 108.

The vehicle function controller 120 may be connected to one or more actuators 140 such as a steering actuator 142 braking actuator 144 and speed actuator 146 to control the navigation of the autonomous vehicle. The vehicle function controller 120 may include an instruction processing and interpretation module 122, an authorization module 124 and a feasibility check and execution module 126. The vehicle function controller 120 may also include a vehicle control transceiver (not shown) which may be a wired or wireless transceiver for connecting the audio input device 110.

The vehicle function controller 120 may also be connected to a navigation module 150. The navigation module 150 may provide Global Positioning System (GPS) location information and other environment context information such as parking locations, roadworks, and other information used for the navigation of the autonomous vehicle.

The vehicle function controller 120 may connect via a wired or wireless vehicle control transceiver (not shown) to an audio output device 130 including an audio processor 132. The audio output device 130 may be connected to a speaker 134 to provide acoustic feedback to the passengers of the autonomous vehicle. The audio output device 130 and the speaker 134 may be referred to herein as a speaker unit. The speaker unit may be incorporated in the vehicle or be part of a mobile hearable device. In other examples the vehicle function controller 120 may be connected to a screen for visual feedback instead of or as well as an audio output device 130.

In some examples the microphone unit and the speaker unit may be part of a mobile hearable device such as a hearing aid or other hearing device which may be wirelessly coupled to the vehicle function controller 120 for example by transmitter which may be a near field magnetic induction (NFMI), a near field electromagnetic induction (NFEMI), Bluetooth, or Ultra-Wide-Band (UWB) transmitter. NFMI refers to any communication means that makes use of transmissions within a localized magnetic field. NFEMI is an extension of NFMI which also uses an electric antenna for transmissions as explained for example in US 9197986B1 and European Patent application 15164621.3.

In operation, when a vehicle occupant speaks the audio input device 110 may receive the audio signal from the microphone 102. The audio input device 110 may perform voice command detection with voice command detector 104 followed by voice command processing and interpretation by the voice command processing and interpreter 106 . The results of the voice command processing and interpretation may be broadcast by the broadcast instruction module 108 to the vehicle function controller 120. In some examples, the assembled instruction may be output from the audio input device 110 and broadcast via a wired or wireless connection to the vehicle function controller 120.

The vehicle function controller 120 may receive and process the instruction with instruction processing and interpretation module 122. Following instruction processing and interpretation a check is made by the authorization module 124 to determine to identify whether voice commands are provided by an authorized occupant of the vehicle. In some examples, identification of an authorized person may be based on either seat location, biometric data, from voice recognition, visual information. The feasibility check and execution module 126 may output an audio signal to the audio output device 130 if the command is not authorised or it is not feasible to execute the command for some other reason. If the command is authorised and feasible, the command may be executed to control the actuators 140 in order to navigate the autonomous vehicle based on information from the navigation module 150 and the authorized command. Audio input device 110, vehicle function controller 120 and audio output device 130 may be implemented in hardware or a combination of hardware and software.

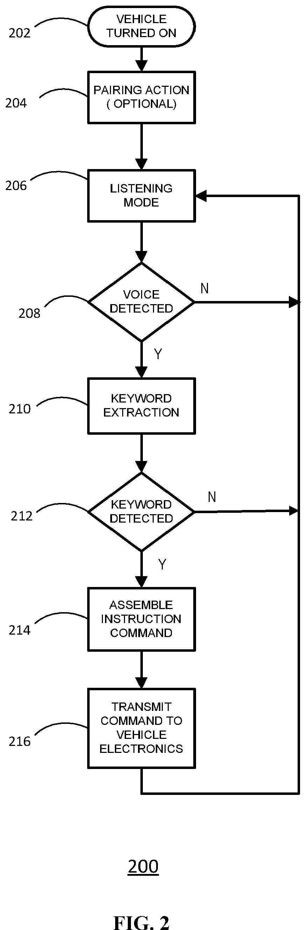

Figure 2 describes a method 200 of operating the audio input device 110. In step 202 the autonomous vehicle may be switched on. In step 204 an optional pairing action may occur between the audio input device 110 and the vehicle function controller 120. This may be done for examples of the audio input device which are wirelessly coupled to the vehicle function controller 120 using for example a Bluetooth, UWB, NFMI or NFEMI wireless connection. In examples when the audio input device 110 is fixed in the vehicle interior or connected by a wired connection, the pairing may not be required. In step 206 the audio input device 110 may be in a listening mode. In step 208, the audio input device may determine whether a voice has been detected. If a voice has not been detected, the method may return to step 206. If a voice has been detected, the method may proceed to step 210 and extract keywords from the speech. Keyword extraction may be implemented for example using temporal convolution networks as described in "Temporal Convolutional Networks for Action Segmentation and Detection", Colin Lea et al, 16th November 2016, arXiv:1611.05267. An extracted keyword may be compared against known vehicle-navigation commands in step 212. If a known command has not been detected, then the method returns to step 206. If a known command has been detected then the method proceeds to step 214 in which a command instruction may be assembled including the command keyword and additional authentication information such as for example the seat location of the occupant. In step 216 the assembled command may be transmitted to the vehicle function controller. Following step 216, the method may return to listening mode step 206.

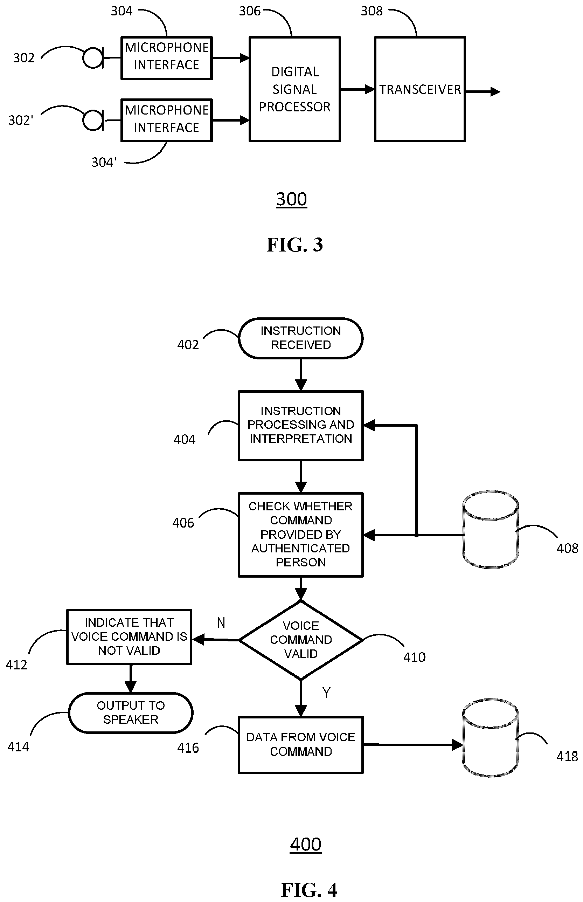

Figure 3 Shows an example implementation of a microphone unit 300 which may implement the method 200. Microphone unit 300 includes first and second microphone 302, 302' connected to a respective microphone interface 304. 304'. The microphone interface outputs may be connected to a digital signal processor 306. The output of the digital signal processor 306 may be connected to a wired or wireless transceiver 308 for communication with for example vehicle function controller 120. The microphone unit may have two microphones which for example may allow beamforming which may for example be implemented by software executed on the digital signal processor 306. Using beamforming may improve the discrimination between the intended user and background noise or speech from other occupants of the vehicle.

Figure 4 shows an example method of operation 400 which may be implemented by the vehicle function controller 120. In step 402 an instruction from the microphone unit may be received by the vehicle function controller. In step 404 the instruction may be processed to check whether it includes a valid command The extracted keyword may be compared with the database keyword instruction set to make a comparison if the keyword is valid. A list of valid commands may be provide in database 408. Step 404 may be implemented for example by the instruction processing and interpretation module 122. In step 406 an authorization check is made to determine whether a command is provided by an authorized person.

An authorized person may be a person that wears a paired hearable/wearable or a person that is located on a given seat. Authorised person and location information may be stored in database 408. In some examples, authorization is done by pairing so that only voice commands that are provided from a paired device are authorized for execution. In other examples authorization may be based on Seating location. In some examples, navigation may be authorized from a given seat within the vehicle. In other examples, navigation may only be permitted from a particular seat location. Alternatively, navigation could be handed-over to be done from any other seat within the vehicle.

In a navigation system using hearable devices, the detection of the seat location may be implemented for example as described in European patent application 19187261.3, where a seat ID transceiver is part of the seat. When receiving a voice command including the seat ID, it is then checked whether the command is provided from an authorized seat. In other examples, the voice signature of the authorized person may be stored as part of the authenticated persons/seats database. A signature may be stored for all of the keywords. Hence when a person provides a voice command, it is checked whether his/her voice is matching the signature stored. If so, the navigation command will be further processed.

In some examples, in addition to audio detection, the authentication may include face recognition. Once a voice command has been provided together with a seat location, a check is done via a camera system whether the occupant of the vehicle that provided the voice command is authorized to navigate the vehicle. In other examples a centralized microphone system may be used that includes a direction of where the voice command came from.

In a centralized microphone system, a microphone may be paired with more than one microphone. For example, there could be a microphone on each side (left/right) of a centre microphone. From the relative signal strengths and time delay of the audio signal detected by each microphone, the direction of the audio source may be determined.

Following the authorization check in step 406,the method proceeds to step 410 which checks if the command is valid. The voice command is classified as invalid when it has been provided by a non-authorized person, or when it is not a valid navigation instruction for the vehicle. If the command is invalid, the method proceeds to step 412 and an audio signal is generated for example an alert sound or a generated speech message to be provided to the vehicle occupants. This audio signal is then output on a speaker in step 414 which may be implemented using the audio output device 130 and speaker 134. Returning to step 410 if the command is valid and provided by an authorized person, the navigation instruction may be captured in step 416 and stored for execution in step 418. Authorization and validity checks carried out in steps 406 and 410 may be implemented for example by authorization module 124.

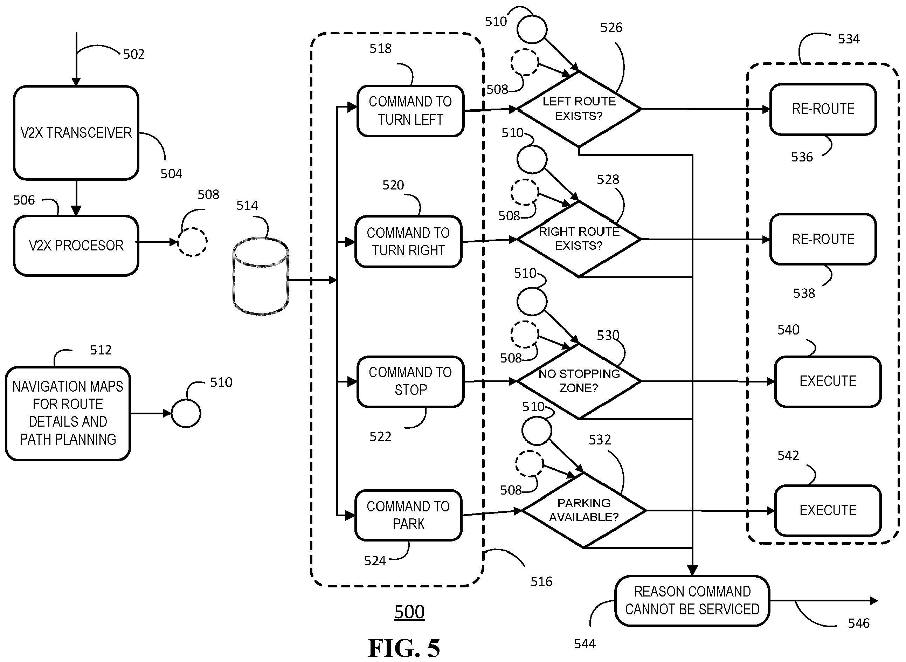

Figure 5 shows an example method of operation 500 which may be implemented by the vehicle function controller 120. Method 500 indicates the operation for a navigation action process which may be implemented for example by feasibility check and execution module 126. In the example shown, the commands are Turn Left, Turn Right, Stop, and Park but it will be appreciated that other commands may also be similarly processed. The navigation instruction for execution which may be determined by method 400 is captured in step 514 and processed in step 516. If the command is to "*turn left*" the method proceeds to step 518 and in step 526 a determination is made whether a route exists that allows the vehicle to comply with the instruction. This determination step 526 may require environmental information to provide the information about the context in which the vehicle is operating. This can be traffic light related information, or safety related aspects like the presence of other vehicles, pedestrians, cyclists etc This environmental information may be provided via a V2X connection 502, V2X transceiver 504 and V2X processor 506. Alternatively or in addition the environmental information may be provided by navigation maps 512.

As illustrated, the information from V2X processor 506 is provided to the decision step 526 schematically by the connection 508. Map information for route details and path planning may be provided by connection 510. If the left route exists the method proceeds to an execution step 534. For the left turn instruction in step 536 the actuators of the autonomous vehicle may be controlled to re-route. If the left route does not exist, for example due to a closed street, safety related aspects such as no turn or stop permitted in the current location, the method proceeds to step 544 and an indication is provided to the used that the command cannot be serviced. This indication may be a computer generated speech or other audio indication.

Similarly if the command is to "*turn right*" the method proceeds to step 520 and in step 528 a determination is made whether a route exists that allows the vehicle to comply with the instruction. If the route exists the method proceeds to an execution step 534. For the right turn instruction in step 538 the actuators of the autonomous vehicle may be controlled to re-route. If the left route does not exist, the method proceeds to step 544 as previously described.

If the command is to "*stop*" the method proceeds to step 522 and in step 530 a determination is made whether a stopping zone exists that allows the vehicle to comply with the instruction. If the stopping zone does not exist the method proceeds to an execution step 534. In step 540 actuators in the autonomous vehicle may be controlled to execute the stop instruction. If it is not possible to execute the stop instruction, the method proceeds to step 544 as previously described.

If the command is to "*park*" the method proceeds to step 524 and in step 532 a determination is made whether a stopping zone exists that allows the vehicle to comply with the instruction. If the stopping zone does not exist the method proceeds to an execution step 534 In step 54 actuators in the autonomous vehicle may be controlled to execute the park instruction. If it is not possible to execute the stop instruction, the method proceeds to step 544 as previously described.

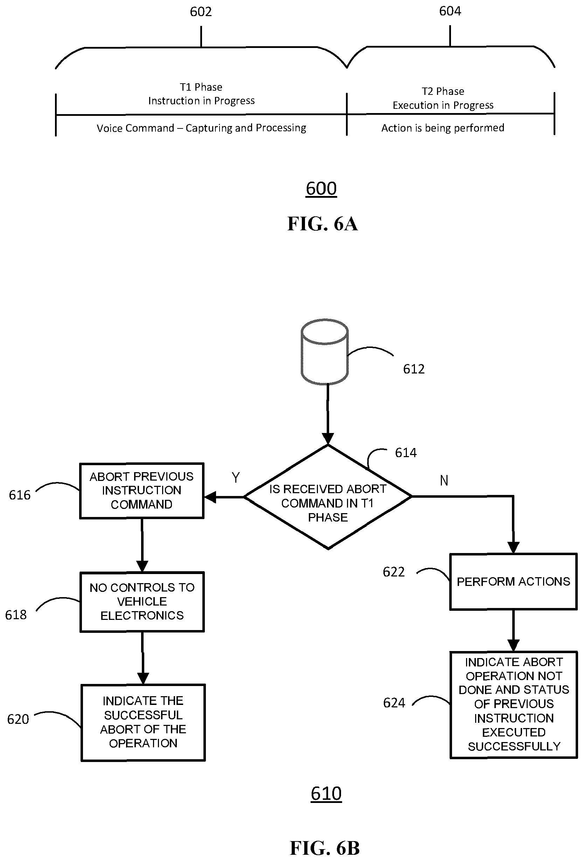

Figures 6A and 6B illustrate an example operation of an "*abort*" command. Figure 6A shows the possible phases of operation 600. In a first phase or T1 phase 602, the voice command capturing and processing is in progress. In a second phase 604 or T2 phase, the execution is in progress i.e. the action is being performed.

Figure 6B shows an example abort process 610. In step 612 the captured navigation abort command is received, In step 614 a check is made to determine whether the received abort command is in the T1 phase 602. If the abort command is in the T1 phase 602 then in step 616, the previous instruction command is cancelled and in step 618 no control instructions are issued by the vehicle function controller. In step 620 an indication is generated that the abort operation was successful. Returning to step 614 if the abort command is in the T2 phase 604, then the actions of the current instruction continue to be executed in step 622 and in step 624 the user receives feedback that the abort operation was not done and the previous instruction has been executed.

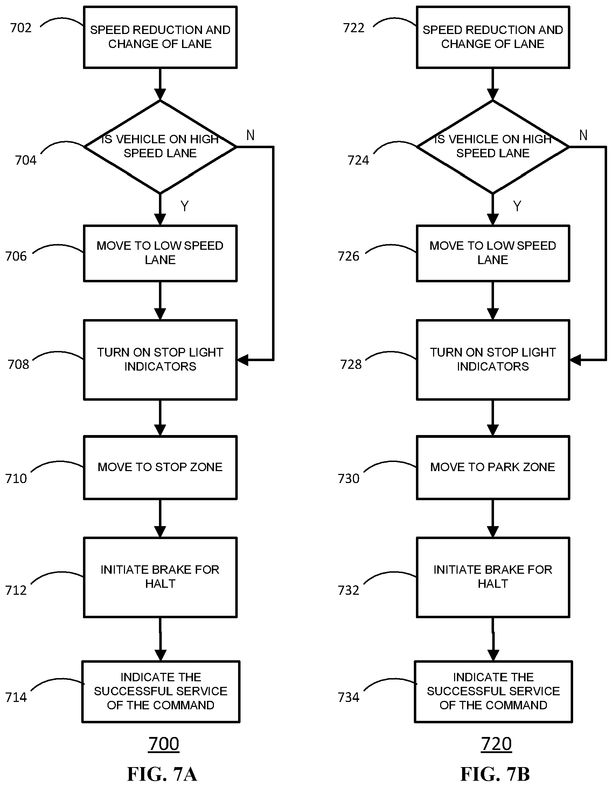

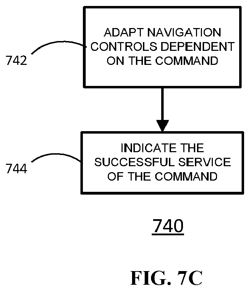

Figures 7A, 7B and 7C illustrate a further example detail of the execution steps 534 shown in figure 5.

Figure 7A shows a method 700 of executing a stop instruction which may be used to implement execution step 540 in method 500. In step 702 the method may control the actuators to reduce speed and initiate a lane change. In step 704 a check is made to determine whether the vehicle is on a high speed lane. If the vehicle is not on a high speed lane then the method proceeds to step 708 and stop light or hazard indicators may be activated. Returning to step 704, if the vehicle is on a high speed lane then the method proceeds to step 706 and the vehicle actuators are controlled to move the autonomous vehicle to a low speed lane and then to step 708. Following step 708, the actuators may be controlled to move the vehicle to a stop zone in step 710 and then in step 712 the brakes are actuated to halt the vehicle. In step 714 the completion of the command may be indicated by generating an audio output.

Figure 7B shows a method of executing a park instruction 720 which may be used to implement execution step 542 in method 500. In step 722 the method may control the actuators to reduce speed and initiate a lane change. In step 724 a check is made to determine whether the vehicle is on a high speed lane. If the vehicle is not on a high speed lane then the method proceeds to step 728 and stop light or hazard indicators may be activated. Returning to step 724, if the vehicle is on a high speed lane then the method proceeds to step 726 and the vehicle actuators are controlled to move the autonomous vehicle to a low speed lane and then to step 728. Following step 728, the actuators may be controlled to move the vehicle to a stop zone in step 730 and then in step 732 the brakes are actuated to halt the vehicle. In step 734 the completion of the command may be indicated by generating an audio output.

Figure 7C shows a method of executing a re-route instruction 740 which may be used to implement steps 536 and 538. In step 742 navigation controls may be adapted depending on the command. In step 744 the successful service of the command may be indicated.

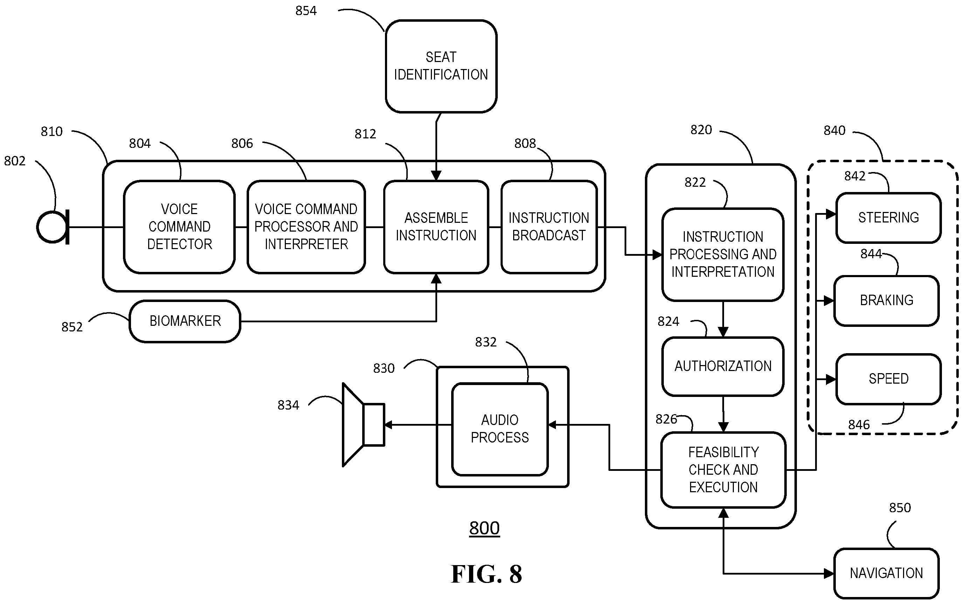

Figure 8 illustrates a system 800 for in-vehicle voice control of an autonomous vehicle according to an example embodiment. The system 800 may implement one or more of the methods 200, 400, 500, 510, 610, 700, 720. The system 800 includes an audio input device 810 coupled to a microphone 802 that captures a voice command which may be a vehicle-navigation command and provides it to the vehicle electronics implementing a vehicle function controller 820. The audio input device 810 and microphone 802 may be referred to herein as a microphone unit. The audio input device 810 may include a voice command detector 804, a voice command processor and interpreter 806 an instruction assembler 812 and an instruction broadcast module 808.

The vehicle function controller 820 may be connected to one or more actuators 840 such as a steering actuator 842 braking actuator 844 and speed actuator 846 to control the navigation of the autonomous vehicle. The vehicle function controller 820 may include an instruction processing and interpretation module 822, an authorization module 824 and a feasibility check and execution module 826. The vehicle function controller 820 may also include a vehicle control transceiver (not shown) which may be a wired or wireless transceiver for connecting the audio input device 810.

The vehicle function controller 820 may also be connected to a navigation module 850. The navigation module 850 may provide GPS location information and other environment context information such as parking locations, roadworks, and other information used for the navigation of the autonomous vehicle.

The vehicle function controller 820 may have an output connected by a wired or wireless connection to an audio output device 830 including an audio processor 832. The audio output device 830 may be connected to a speaker 834 to provide acoustic feedback to the passengers of the autonomous vehicle. The audio output device 830 and the speaker 934 may be referred to herein as a speaker unit. The speaker unit may be incorporated in the vehicle or be part of a mobile hearable device.

In some examples the microphone unit and the speaker unit may be part of a mobile hearable device such as a hearing aid or other hearing device which may be wirelessly coupled to the vehicle function controller 820 for example by transmitter which may be a near field magnetic induction (NFMI) transmitter or a near field electromagnetic induction transmitter (NFEMI), Bluetooth and Ultra-Wide-Band (UWB) communication.

In operation, when a vehicle occupant speaks the audio input device 810 may receive the audio signal from the microphone 802. The audio input device 810 may perform voice command detection with voice command detector followed by voice command processing and interpretation. The instruction assemble module 812 may receive a seat identifier for example from a seat identification transceiver which may be wirelessly coupled to the audio input device 810. The instruction assemble module 812 may receive biomarker data from the biomarker module 852 . In some examples the biomarker module 852 may be included in the vehicle. Alternatively or in addition, in other examples the biomarker module 852 may be in the audio input device 810. The results of the voice command processing and interpretation instruction may be broadcast by the broadcast instruction module 808 to the vehicle function controller 820. In some examples, the assembled instruction may be output from the audio input device 810 and broadcast via a wired or wireless connection to the vehicle function controller 820.

The vehicle function controller 820 may receive and process the instruction with instruction processing and interpretation module 822. Following instruction processing and interpretation a check is made by the authorization module 824 to determine to identify whether voice commands are provided by an authorized occupant of the vehicle. In some examples, identification of an authorized person may be based on either seat location, biometric data, from voice recognition, visual information. The feasibility check and execution module 826 may output an audio signal to the audio output device 830 if the command is not authorised or it is not feasible to execute the command for some other reason such. If the command is authorised and feasible, the command may be executed to control the actuators 840 in order to navigate the autonomous vehicle based on information from the navigation module 850 and the authorized command. Audio input device 810, vehicle function controller 820 and audio output device 830 may be implemented in hardware or a combination of hardware and software.

Example embodiments described provide an intelligent voice-based human-machine interface for vehicles that enable control the navigation functionality of the vehicle from personalized zones of passengers inside vehicles. Any occupant of the vehicle is enabled to interact with the vehicle by means of voice commands, for navigating the vehicle to destination from their personal seating zone. The control actuators include, but are not limited to, Speed Control Unit, Brake Control Unit, Steering Control Unit, Start / Stop. Embodiments described herein may allow the direct connection between an occupant of the vehicle providing the voice command comprising at least a navigation command to a Navigation control unit of Vehicle electronics, the authorization of an occupant of the vehicle to allow execution of the given navigation instruction. A voice command comprising at least a navigation command may be validated by Vehicle electronics for the allowable Navigation control commands. Navigation commands are checked for feasibility of execution in conjunction with at least predefined navigation maps and V2X information. Adapting the navigation controls like steering, speed etc. in conjunction with at least V2X and navigation maps for path planning and rerouting to the new destination in Realtime. The command may be aborted before the navigation controls execute the instruction and provide the feedback to the occupants of the vehicle. One or more embodiments may enable lane change assist, indicators etc., for path rerouting, stop or park command. One or more embodiments may enable navigating to stop zone, parking zone based on V2X information and initiating the stop or parking sequence. The audio control system as described herein may be used with autonomous vehicles configured for example as a robot taxi.

A method and apparatus for controlling an autonomous vehicle is described. An audio signal is detected and processed the to determine whether the speech comprises a vehicle-navigation command. The audio signal is analyzed to determine whether the signal includes speech from an authorised occupant of the vehicle. If the speech includes an authorised vehicle-navigation command which is feasible to execute given the current position of the vehicle, the command is executed to control the direction and speed of the autonomous vehicle.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method for controlling an autonomous vehicle, the method comprising:
detecting an audio signal;
processing the audio signal to determine whether the speech comprises a vehicle-navigation command;
determining whether the audio signal comprises speech from an authorised occupant of the vehicle;
in response to the speech comprising an authorised vehicle-navigation command, determining whether execution of the vehicle-navigation command is feasible and
executing the vehicle-navigation command if feasible to control at least one vehicle actuator to control the direction and speed of the autonomous vehicle.

2. The method of claim 1 further comprising providing feedback to the authorized occupant if execution of the vehicle navigation command is not feasible.

3. The method of any preceding claim wherein determining whether the audio signal comprises speech of an authorised occupant of the vehicle further comprises determining the seat location of the occupant.

4. The method of any preceding claim further comprising in response to determining that the execution of the vehicle is not feasible, providing an indication to the user that the action is prohibited.

5. The method of any preceding claim further comprising comparing the voice signature of the received speech with a predetermined speech signature database and determining if an occupant is an authorised occupant from the comparison.

6. The method of any preceding claim wherein determining whether execution of the vehicle-navigation command is feasible comprises:
receiving navigation data via at least one of an in-vehicle navigation system and vehicle-to-x (V2X) network; and
obtaining environmental context attributes from the received navigation data.

7. The method of any preceding claim further comprising:
receiving an abort instruction for a previously issued command;
determining whether the previously issued command is in an execution phase;
cancelling the previously issued command if the previously issued command is not in an execution phase.

8. An audio device comprising: a microphone; a transceiver; a processor coupled to the transceiver and the microphone and configured to:
process the audio signal to determine whether the speech comprises a vehicle-navigation command;
transmit a control instruction comprising the vehicle-navigation command to a vehicle control system coupled to the audio device, the vehicle control system being configured to determine whether the vehicle-navigation command is authorised; and
in response to determining that the vehicle-navigation command is authorized , control at least one actuator in the vehicle dependent on the authorized vehicle-navigation command.

9. The audio device of claim 8 further configured to: receive a location identifier via the transceiver from a location identification transmitter located in a vehicle; and wherein the control instruction further comprises the received location identifier and wherein the vehicle control system is further configured to determine whether the audio signal comprises speech from an authorised occupant of the vehicle from the location of the occupant provided by the location identification transmitter.

10. The audio device of claim 8 or 9 configured as a mobile hearable device and comprising a wireless transceiver configured as one of a near field magnetic induction, NFMI, transceiver, a near field electromagnetic induction, NFEMI, transceiver and an Ultra-Wide-Band, UWB, transceiver.

11. A vehicle control apparatus for an autonomous vehicle comprising:
a vehicle function controller configured to be coupled to one or more vehicle actuators and comprising a vehicle control transceiver configured to be coupled to an audio device;
wherein the vehicle control transceiver is configured to receive a vehicle-navigation command from the audio device and is further configured to determine whether the vehicle-navigation command is authorized and to control the one or more vehicle actuators to control the direction and speed of the autonomous vehicle dependent on the authorized vehicle-navigation command.

12. The vehicle control apparatus of claim 11 further comprising at least one location identification transmitter located in the autonomous vehicle wherein each of the at least one location identification transmitters are configured to transmit a respective location identifier for authorizing a vehicle-navigation command to the audio device.

13. The vehicle control apparatus of claim 12 wherein the at least one location identification transmitter comprises a wireless transceiver configured as one of a near field magnetic induction, NFMI, transceiver, a near field electromagnetic induction, NFEMI, transceiver and an Ultra-Wide-Band, UWB, transceiver.

14. A system for controlling an autonomous vehicle comprising the audio input device of any of claims 8 to 10 and the vehicle control apparatus of claims 11 to 13.

15. A non-transitory computer readable media comprising a computer program comprising computer executable instructions which, when executed by a processing unit, causes the processing unit to control an autonomous vehicle by performing the steps of:
detecting an audio signal;
processing the audio signal to determine whether the speech comprises a vehicle-navigation command;
determining whether the audio signal comprises speech from an authorised occupant of a vehicle;
in response to the speech comprising an authorised vehicle-navigation command, determining whether execution of the vehicle-navigation command is feasible and
executing the vehicle-navigation command if feasible to control at least one vehicle actuator to control the direction and speed of the autonomous vehicle.
